# EUROPEAN PATENT APPLICATION

(11) **EP 4 640 507 A2**
(43) Date of publication of application: **29.10.2025**
(21) Application number: 25196199.1
(22) Date of filing: 15.08.2025
(51) Int. Cl.: B60T 17/04, F04B 37/14, F04B 39/12, B60T 13/46

(54) **VACUUM PUMP ASSEMBLY**

(30) Priority: 23.05.2025 CN 202510669365
(71) Applicant: ZHEJIANG VIE SCIENCE & TECHNOLOGY CO., LTD., Zhuji, Shaoxing, Zhejiang 311835 (CN)
(72) Inventor: Chen, Feng, Zhejiang (CN); Si, Chenfeng, Zhejiang (CN); Qiu, Baoxiang, Zhejiang (CN); Xu, Chong, Zhejiang (CN); Liu, Shiming, Zhejiang (CN); Tao, Lu, Zhejiang (CN); Gong, Guyuan, Zhejiang (CN); Gong, Jianrong, Zhejiang (CN); Zhu, Guolan, Zhejiang (CN)
(74) Representative: karo IP

(57) **Abstract**

Disclosed is a vacuum pump assembly, which relates to vacuum technologies, including a vacuum pump and a rotating nozzle rotatably connected to an intake port of the vacuum pump, an air intaking direction of the rotating nozzle being angled relative to a rotating axis of the rotating nozzle; further including a silencer, the silencer being fixedly mounted at an exhaust port of the vacuum pump, an exhaust pipe being further mounted on an exhaust end of the silencer, the exhaust pipe being configured with a one-way exhaust structure, the vacuum pump being further configured with a vibration-damping pad. By mounting a freely rotatable rotating nozzle at the intake port of the vacuum pump assembly according to the disclosure, the initial intake direction can be changed by turning the rotating nozzle, which facilitates arranging the vacuum tube between the vacuum pump assembly and the vacuum booster. By arranging the silencer and the one-way exhaust structure, this disclosure can effectively reduce operating noise of the vacuum pump assembly and effectively prevent foreign contaminants from entering the vacuum pump assembly. By arranging the vibration-damping pad, this disclosure can effectively reduce vibration of the running vacuum pump assembly to enhance vehicle comfort.

## Description

The subject matter described herein relates to vacuum equipment, and more particularly relates to a vacuum pump assembly.

A vacuum booster is a reliable, economical solution widely applied in a hydraulic braking system to amplify a braking force. Negative pressure is essential for the vacuum booster to work. An inner chamber of the vacuum booster is separated into at least one vacuum chamber and one working chamber. In many circumstances, a desired negative pressure may be ensured by connecting the vacuum chamber to an intake manifold of a naturally-aspirated internal combustion engine. However, in cases of a diesel engine, a turbocharging, or electric drive apparatus, or an increased braking demand due to higher vehicle weight, the negative pressure supplied by air intaking of the vehicle drive apparatus would be insufficient.

To ensure a reliable, sufficient negative pressure supply, an independent vacuum pump assembly is needed, which draws in the remnant air from the vacuum chamber of the vacuum booster and exhausts it into the atmosphere. Vacuum pump assemblies found in the market are typically piston-type, vane-type, and diaphragm-type dry running structures.

In the automobile industry, the space available for mounting the vacuum pump assembly and the vacuum booster is generally narrow, so that a vacuum tube connected between the vacuum pump assembly and the vacuum booster is likely bent upon mounting, leading to blockage of the vacuum tube air passage, and in serious circumstances, it would be difficult or even impossible to mount the vacuum tube.

In addition, in the automobile industry, extreme driving conditions also pose higher requirements on the safety, longevity, cost, and noise emission of the vacuum pump assembly; particularly for a dry-running vacuum pump assembly, the serious vibration and noise generated during running not only affects its service longevity, but also affects comfort of the vehicle.

Moreover, the exhaust port of a conventional vacuum pump assembly is directly connected to the atmosphere, which poses a risk of letting in water and dusts and thusly needs to be sealed to protect the vacuum pump assembly from being contaminated and eroded by foreign mediums or from premature wear.

To overcome an issue of the conventional technologies, a vacuum pump assembly according to Claim 1 is proposed. Embodiments thereof are subject-matter of the dependent claims.

To overcome an issue of the conventional technologies in which it is difficult to connect a vacuum pump assembly mounted in a narrow space to a vacuum booster, the present disclosure provides a vacuum pump assembly so as to at least partially overcome the issue.

A technical solution of the present disclosure is set forth below:
a vacuum pump assembly, comprising a vacuum pump and a rotating nozzle rotatably connected to an intake port of the vacuum pump, wherein an air intaking direction of the rotating nozzle is angled relative to a rotating axis of the rotating nozzle.

In some example implementations, the rotating nozzle comprises an intake tube having one end closed and an intake nozzle communicating with the intake tube, an open end of the intake tube rotating about an axis which is a centerline thereof so as to be connected to the intake port of the vacuum pump, the intake nozzle being connected on a side wall of the intake tube, the intake nozzle being angled relative to the rotating axis of the rotating nozzle.

In some example implementations, the intake nozzle is perpendicular to the rotating axis of the rotating nozzle.

In some example implementations, an intake stub is formed at the intake port of the vacuum pump, the intake tube being mutually fitted with the intake stub in a spigot-and-socket manner, the intake tube being detachably connected to the intake stub via a quick-connect coupler.

In some example implementations, the quick-connect coupler comprises an elastic clamp member of a substantially ring shape with a notch, an annular fit-in recess fitted with the elastic clamp member being provided on a circumferential outer wall of an inside one of the intake tube and the intake stub, and a socket for the elastic clamp member to pass through being arranged on a side wall of an outside one of the intake tube and the intake stub.

In some example implementations, the quick-connect coupler further comprises a securing member connected to the elastic clamp member, the securing member being adapted to the socket on the intake tube; and when the elastic clamp member is clamped in the annular fit-in recess, the securing member is fitted with the socket.

In some example implementations, two quick-connect couplers arranged circumferentially at an interval are provided, and two sockets are correspondingly provided on the sidewall of the outside one of the intake tube and the intake stub.

In some example implementations, the vacuum pump assembly further comprises a silencer, the silencer being fixedly mounted at an exhaust port of the vacuum pump, an exhaust pipe being further mounted on an exhaust end of the silencer, the exhaust pipe being configured with a one-way exhaust structure.

In some example implementations, the exhaust pipe is a U-shaped pipe, one end of which is connected to the exhaust end of the silencer, an opposite end of which is connected on a receptacle fitting fixed to a surface of the silencer; the one-way exhaust structure being fixedly mounted in the receptacle fitting, an exhaust hole being provided on a sidewall of the receptacle fitting.

In some example implementations, the vacuum pump is further configured with a vibration-damping pad.

With the technical solutions noted *supra,* the present disclosure offers the following benefits: by mounting a freely rotatable rotating nozzle at the intake port of the vacuum pump assembly according to the present disclosure, the initial intake direction can be changed by turning the rotating nozzle, which facilitates arrangement of the vacuum tube between the vacuum pump assembly and the vacuum booster.

Fig. 1 is a structural schematic diagram of the present disclosure.

Fig. 2 is a top view of the present disclosure.

Fig. 3 is a sectional view along line A-A in Fig. 2.

Fig. 4 is an exploded view of a rotating nozzle and a quick-connect coupler.

In the drawings: 1 - vacuum pump; 11- intake stub; 12 - seal ring; 13 - rigid isolating ring; 14 - annular fit-in recess; 2 - rotating nozzle; 21 - intake tube; 22 - intake nozzle; 23 - socket; 3 - quick-connect coupler; 31 - elastic clamp member; 32 - securing member; 4 - silencer; 41 - receptacle fitting; 42 - exhaust hole; 5 - exhaust pipe; 6 - one-way exhaust structure; 7 - vibration-damping pad.

Hereinafter, example implementations of the present disclosure will be further described with reference to the accompanying drawings. It is noted here that, these example implementations as described are intended only for facilitating understanding of the present disclosure, which do not constitute limitations to the present disclosure. In addition, the technical features involved in respective example implementations as described infra may be combined with each other so long as they do not conflict.

It is noted that, the orientational or positional relationships indicated by the terms "upper," "lower," "left," "right," "front," and "rear" referred to herein are explanations of the structure of the present disclosure as illustrated in the drawings, which are intended only for simplifying relevant illustrations, not for indicating or implying that the devices or elements compulsorily possess those specific orientations and are compulsorily configured and operated with those specific orientations; therefore, such terms shall not be construed as limitations to the disclosure.

The terms "first" and "second" referred to herein are only used for distinguishing same or similar structures or corresponding structures with similar functions, which shall not be construed as ranking of importances of such structures, or ordering these structures, or comparing their sizes, or interpreted otherwise.

In addition, unless otherwise explicitly provided and limited, the terms such as "mount" and "connect" shall be understood broadly, which, for example, may refer to a fixed connection, a detachable connection, or an integral connection; which may be a mechanical connection or an electrical connection; which may be a direct connection or an indirect connection via an intermediate medium; which may also be a communication between the insides of two elements. To a person of normal skill in the art, specific meanings of these terms in the present disclosure may be construed in the context according to the general idea of the present disclosure.

### First Implementation

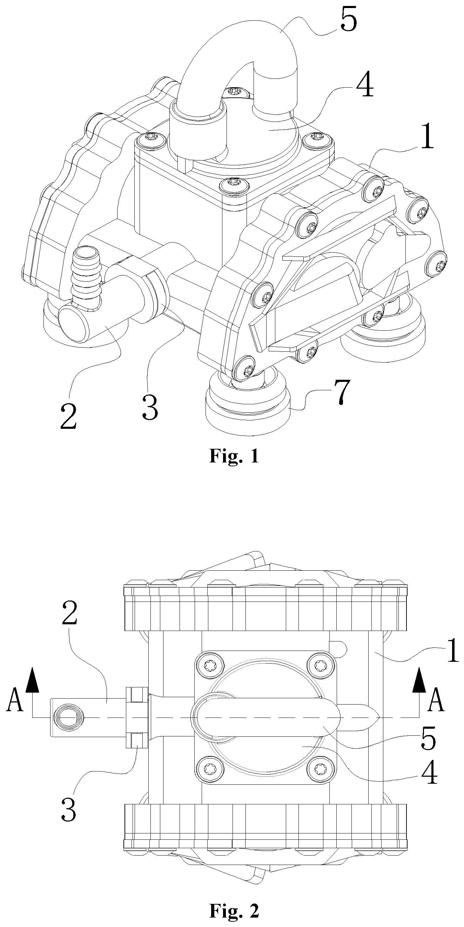

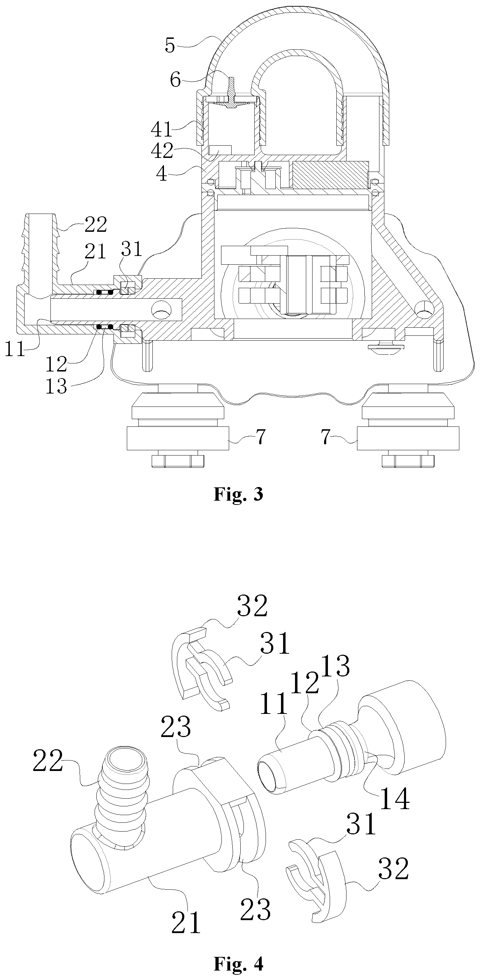

A vacuum pump assembly, as illustrated in Figs. 1 to 4, comprises a vacuum pump 1 and a rotating nozzle 2.

In this implementation, the vacuum pump 1 has an intake port for drawing in air and an exhaust port for exhausting air. A specific type of the vacuum pump 1 is not limited here; any existing type is allowed, usually an electric motor-driven vacuum pump.

The rotating nozzle 2 is rotatably connected to the intake port of the vacuum pump 1, an air intaking direction of the rotating nozzle 2 is angled relative to its rotating axis, e.g., 90°, which, of course, may also be another angle; in this way, an initial intake direction, i.e., the orientation of the intake port of the rotating nozzle 2, can be changed by rotating the rotating nozzle 2, whereby the mounting direction of the vacuum tube connected to the rotating nozzle 2 is changed, which facilitates flexibly mounting the vacuum tube in a limited space; an opposite end of the vacuum tube serves to attach a device operating under negative pressure, e.g., a vacuum booster for amplifying a braking force in a hydraulic braking system.

The rotating nozzle 2 specifically comprises an intake tube 21 and an intake nozzle 22.

The intake tube 21 has a tubular configuration with one end closed and an opposite end open; the open end of the intake tube 21 rotates about its own centerline as an axis so as to be connected to the intake port of the vacuum pump 1. To facilitate mounting, an intake stub 11 is usually formed at the intake port of the vacuum pump 1; the air intake 21 is co-axially sleeved outside the intake stub 11 in an interstice-fitting manner, with a seal ring 12, e.g., an O-ring, being arranged therebetween to ensure no air leakage while the intake tube 21 is rotating. To enhance the sealing effect, two or more passes of seal rings 12 may be provided, which can be arranged in a same sealing slot; of course, a rigid isolating ring 13 is generally provided between two neighboring seal rings 12.

In addition, the intake tube 21 is connected to the intake stub 11 via a quick-connect coupler 3; this can not only ensure connection stability between the intake tube 21 and the intake stub 11, but also can facilitate quick assembly/disassembly.

The quick-connect coupler 3 specifically comprises an elastic clamp member 31 and a securing member 32.

The elastic clamp member 31 has a substantially ring shape; an annular fit-in recess 14 fitted with the elastic clamp member 31 is provided on a circumferential outer wall of the intake stub 11, an inside diameter of the elastic clamp member 31 being adapted to a diameter of the annular fit-in recess 14, an outer edge surface of the elastic clamp member 31 protruding from a circumferential surface of the intake stub 11. A notch is formed on the elastic clamp member 31, a size of the notch being smaller than the diameter of the intake stub 11 (specifically the annular fit-in recess 14); upon assembly, the elastic clamp member 31 is clamped in the annular fit-in recess 14 in an elastic deformation manner.

A socket 23 is provided on a circumferential side wall of the intake tube 21 so that the elastic clamp member 31 can be engaged on the intake stub 11 via the socket 23. The securing member 32 is fixedly connected to the elastic clamp member 31; when the elastic clamp member 31 is clamped on the intake stub 11 via the socket 23, the securing member 32 is at least partially rested in the socket 23. The size and shape of the securing member 32 is generally configured to exactly fit the socket 23, preventing the intake tube 21 from playing axially, which realizes secured connection of the intake tube 21, leaves no noticeable recesses or protrusions on the circumferential side wall of the intake tube 21, and can also ensure free rotation of the intake tube 21.

In this implementation, the intake stub 11 and the intake tube 21 are both configured with a stepped profile; and the socket 23 and the annular fit-in recess 14 are arranged at the larger-diameter ends of the intake tube 21 and the intake stub 11, respectively, while the seal ring is arranged at the smaller-diameter end of the intake stub 11.

It is easily understood that, the securing member 32 is not a must; the elastic clamp member 31 may be configured with an irregular profile so that when it is clamped on the intake stub 11, the irregular protrusion thereon can be rested in the socket 23.

Two quick-connect couplers 3 distributed circumferentially at an even interval are usually provided, which are arranged circumferentially with an interval of 180°. Specifically, the securing members 32 of the two quick-connect couplers 3 are arranged facing each other, the securing members 32 having a certain width (axial length direction), the elastic clamp members 31 being configured with a smaller width size, the two elastic clamp members 31 being arranged to stagger axially with each other. This setting enables the intake tube 21 to keep secured upon mounting; of course, more quick-connect couplers 3 are also allowed, which are likewise distributed circumferentially at even intervals; and it is only needed to arrange the mounting positions of the respective elastic clamp members 31 to stagger axially on the securing members 32.

The vacuum pump assembly according to this implementation of the disclosure is assembled/disassembled in a manner described *infra*:

Upon assembly, the seal ring 12 and the intake tube 21 in the rotating nozzle 2 are assembled sequentially on the intake stub 11 formed at the intake port of the vacuum pump 1, then the quick-connect coupler 3 (the elastic clamp member 31 thereof) is clamped, via the socket 23, in the annular fit-in recess 14 on the intake stub 11 to thereby complete mounting of the rotating nozzle 2; then, the rotating nozzle 2 is turned so that the intake nozzle 22 thereon rotates to an appropriate direction to connect the vacuum tube to a device operating under negative pressure. Upon disassembly, it is only needed to remove the quick-connect coupler 3, whereby the connection between the rotating nozzle 2 and the vacuum pump 1 can be released. Therefore, the present disclosure offers quick, convenient assembly/disassembly.

### Second Implementation

This implementation differs from the first implementation in that the intake tube 21 is fitted in the intake stub 11 in a spigot-and-socket manner, i.e., the intake stub 11 has a larger size, while the intake tube 21 has a smaller size. Correspondingly, it is only needed to arrange the annular fit-in recess on the circumferential outer wall of the intake tube 21, arrange the socket on the circumferential outer wall of the intake stub 11, and arrange the seal ring on the intake tube 21.

### Third Implementation

On the basis of the implementations described *supra,* the vacuum pump assembly according to this implementation further comprises a silencer 4, the silencer 4 being fixedly mounted at the exhaust port of the vacuum pump 1, an intake end of the silencer 4 communicating with the exhaust port of the vacuum pump 1.

An exhaust end of the silencer 4 is fixedly mounted with an exhaust pipe 5; the exhaust pipe 5 is provided with a one-way exhaust structure 6, which is specifically a one-way valve, e.g., an umbrella-shaped one-way valve, so that the exhaust pipe 5 can only discharge air outside, while external air or water or the like cannot enter the silencer 4 via the exhaust pipe 5.

In this implementation, the exhaust pipe 5 is a U-shaped pipe, one end of which is connected to the exhaust end of the silencer 4, an opposite end of which is connected to a receptacle fitting 41 arranged on a surface of the silencer 4; specifically, the one-way exhaust structure 6 is fixedly mounted in the receptacle fitting 41, and an exhaust hole 42 is provided on a side wall of an end of the receptacle fitting 41 distal from the exhaust pipe 5.

### Fourth Implementation

The vacuum pump 1 is further provided with a vibration-damping pad 7, e.g., a columnar or similar construction manufactured of an elastic material such as rubber, a central portion of which is provided with a screw lead-through; a plurality of threaded holes are provided at the bottom side of the vacuum pump 1, e.g., at the four corners of the bottom side; upon mounting, each threaded hole at the bottom side of the vacuum pump 1 is secured via a screw or a bolt, the vibration-damping pad 7 being sleeved on the screw or bolt; in this way, vibration of the operating vacuum pump 1 can be reduced.

The example implementations of the present disclosure have been described in detail with reference to the accompanying drawings. However, the present disclosure is not limited to the implementations described herein. To those skilled in the art, various changes, modifications, replacements and alterations to these implementations.

## Claims

1. A vacuum pump assembly, comprising a vacuum pump and a rotating nozzle rotatably connected to an intake port of the vacuum pump, wherein an air intaking direction of the rotating nozzle is angled relative to a rotating axis of the rotating nozzle.

2. The vacuum pump assembly according to claim 1, wherein the rotating nozzle comprises an intake tube having one end closed and an intake nozzle communicating with the intake tube, an open end of the intake tube rotating about an axis which is a centerline thereof so as to be connected to the intake port of the vacuum pump, the intake nozzle being connected on a side wall of the intake tube, the intake nozzle being angled relative to the rotating axis of the rotating nozzle.

3. The vacuum pump assembly according to claim 2, wherein the intake nozzle is perpendicular to the rotating axis of the rotating nozzle.

4. The vacuum pump assembly according to claim 2, wherein an intake stub is formed at the intake port of the vacuum pump, the intake tube being mutually fitted with the intake stub in a spigot-and-socket manner, the intake tube being detachably connected to the intake stub via a quick-connect coupler.

5. The vacuum pump assembly according to claim 4, wherein the quick-connect coupler comprises an elastic clamp member of a substantially ring shape with a notch, an annular fit-in recess fitted with the elastic clamp member being provided on a circumferential outer wall of an inside one of the intake tube and the intake stub, and a socket for the elastic clamp member to pass through being arranged on a side wall of an outside one of the intake tube and the intake stub.

6. The vacuum pump assembly according to claim 5, wherein the quick-connect coupler further comprises a securing member connected to the elastic clamp member, the securing member being adapted to the socket on the intake tube; and when the elastic clamp member is clamped in the annular fit-in recess, the securing member is fitted with the socket.

7. The vacuum pump assembly according to claim 5 or 6, wherein two quick-connect couplers arranged circumferentially at an interval are provided, and two sockets are correspondingly provided on the sidewall of the outside one of the intake tube and the intake stub.

8. The vacuum pump assembly according to any one of claims 1 - 7, further comprising a silencer, the silencer being fixedly mounted at an exhaust port of the vacuum pump, an exhaust pipe being further mounted on an exhaust end of the silencer, the exhaust pipe being configured with a one-way exhaust structure.

9. The vacuum pump assembly according to claim 8, wherein the exhaust pipe is a U-shaped pipe, one end of which is connected to the exhaust end of the silencer, an opposite end of which is connected on a receptacle fitting fixed to a surface of the silencer; the one-way exhaust structure being fixedly mounted in the receptacle fitting, an exhaust hole being provided on a sidewall of the receptacle fitting.

10. The vacuum pump assembly according to any one of claims 1 - 9, wherein the vacuum pump is further configured with a vibration-damping pad.
